# EUROPEAN PATENT SPECIFICATION

(11) **EP 0 649 772 B1**
(45) Date of publication and mention of the grant of the patent: **06.03.1996**
(21) Application number: 94203341.6
(22) Date of filing: 16.11.1994
(51) Int. Cl.: B60P 1/64

(54) **Articulated vehicle trailer, in particular for transporting containers complying with ISO standards**
Sattelauflieger, insbesondere für Containertransport
Semi-remorque, en particulier pour transporter des conteneurs

(30) Priority: 19.11.1993 NL 9302012
(43) Date of publication of application: 26.04.1995
(73) Proprietor: Strien, Cornelis Gerardus, NL-3415 PS Polsbroek (NL)
(72) Inventor: Strien, Cornelis Gerardus, NL-3415 PS Polsbroek (NL)
(74) Representative: de Bruijn, Leendert C.

(56) References cited:
- EP-A- 0 123 723
- NL-A- 6 918 685
- US-A- 3 163 306
- US-A- 3 288 492
- US-A- 3 481 629
- US-A- 4 230 334

## Description

The invention relates to an articulated vehicle trailer, in particular for transporting containers, comprising a front chassis which has a set of wheels and is to be coupled to a tractor unit, a rear chassis which has a set of wheels and is to be coupled to the front chassis, coupling means for rigidly coupling the front and rear chassis to one another, said coupling means comprising an accommodating sleeve acting as female coupling element fixed to the front chassis and not protruding with respect to the rear of said front chassis, and a push-in component acting as male coupling element protruding forwards with respect to the front of said rear chassis and meant to be pushed into the accommodating sleeve, whereby the wheels of the set of wheels on the front chassis may have such a position or mounting that the trailer can take a bend with appreciable speed without difficulty, one of the possibilities to obtain this being the free hinging of these wheels about a vertical king pivot.

A trailer of this type is disclosed in US-A-3481629.

The trailers seen in practice are mainly trailers which comprise a single mobile chassis which is suitable for transporting either a single large container (40' or 45') or a medium size container (30') or two small containers (20'). In the case where two 20' containers are transported, the container which is located closest to the tractor unit of the trailer can be unloaded only after the other container has been removed. Simultaneous unloading of the two small containers would be possible only if the rearmost container were to be placed on a separate vehicle which brings said container with its end section to be opened to the unloading location. In practice what it comes down to is that the two small containers are unloaded one after the other, which incurs loss of time.

If a combination of two chassis according to said US-A-3481629 would be used for transporting two small containers, simultaneous unloading of the two containers could take place without any problem. However the coupling means only permit coupling of the two chassis to one another by the ends facing one another so that the maximum longitudinal dimension of the coupled chassis is fixed. If said dimension is 40', a 45' container can not be transported with this construction.

The aim of the invention is to overcome this disadvantage and to this end the trailer mentioned in the preamble is characterised in that the rear chassis has at least two sets of wheels, in that in addition or in stead of the free hinging of the wheels of the set of wheels on the front chassis, these wheels could be lifted off the road, and in that the accommodating sleeve and the push-in component are provided with various openings, which can be brought into register with one another to allow the passage of a coupling pin or coupling bolt, in such a way that the two chassis can at least be coupled in a first position, in which the combination is suitable for transporting a 40' container and two 20' containers, and in a second position, in which the combination is suitable for transporting a 45' container.

The purpose of the measure that the wheels of the set of wheels on the front chassis can be lifted off the road and/or can hinge freely about a king pivot is that the trailer can take a bend at appreciable speed without difficulty. The king pivot is a pin or one or two balls which form a pivoting bearing having a substantially vertical axis. The reason why the rear chassis has a coupling element which protrudes in the direction of the front of the trailer and the front chassis is not provided with a component protruding towards the rear is to do with the fact that the rear of both the rear chassis and the front chassis must be able to abut a loading and unloading bay, which is important for effective loading and unloading. Coupling and uncoupling of the two chassis in various positions can be carried exceptionally easily.

In order to provide easy access for Customs to a container on the front chassis, openings can be provided in the push-in component and the accommodating sleeve in order to bring the chassis further apart into a Customs position.

Moreover, openings can be provided in the push-in component and the accommodating sleeve in order to bring the chassis into a position with respect to one another such that two rail containers about 7.15 metres in length can be transported.

The invention will now be explained in more detail with reference to the figures.

Figure 1 shows a trailer according to the invention transporting a 45' container.

Figure 2 shows a trailer transporting one 40' container or two 20' containers.

Figure 3 shows a perspective view of the coupling mechanism for coupling the trailer chassis.

Figure 4 shows a top view of the two trailer chassis.

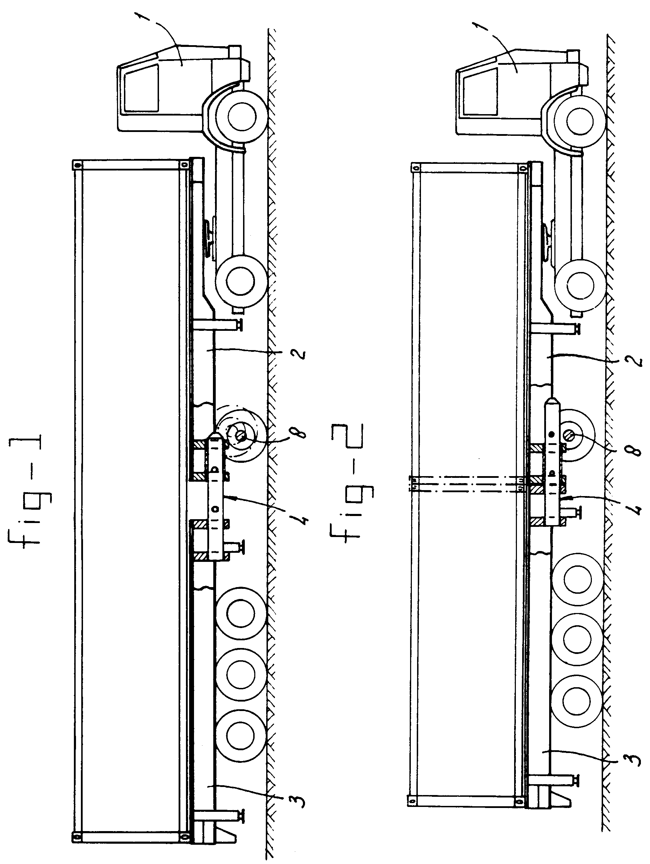

The trailer shown in Figures 1 and 2, which is moved by the tractor unit 1, comprises two chassis 2, 3 which are detachably coupled to one another by means of a coupling mechanism 4. Said mechanism allows two coupling positions: the position shown in Figure 1, in which the coupled chassis 2 and 3 are some distance apart and the resulting trailer can transport a 45', a 40' or a 30' container, or two 20' containers, and the position shown in Figure 2, in which the coupled chassis 2 and 3 abut one another and the resulting trailer can transport a 40' container or a 30' container or two 20' containers.

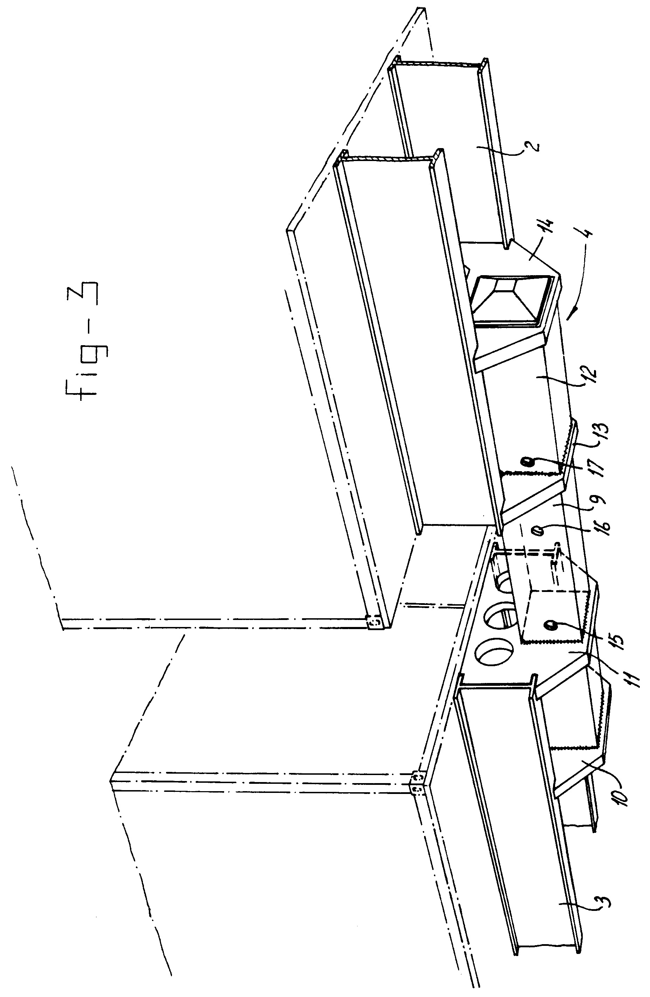

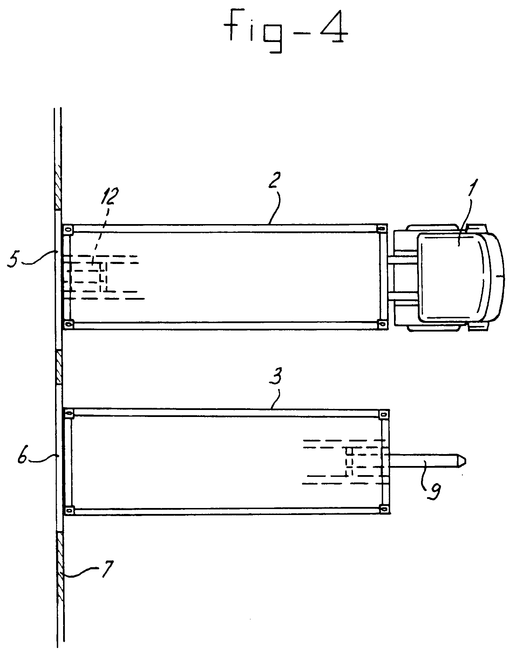

The most important feature of the invention is that if the trailer is transporting two 20' containers said containers can be independently loaded and unloaded by uncoupling the two chassis and driving them into their loading or unloading position. Figure 4 shows this situation from above: the two chassis are arranged alongside one another, each with the loading and unloading opening in front of an opening 5, 6 in the wall 7 of a warehouse.

In Figure 2 the broken lines show the walls of two 20' containers which face one another, for the case where two 20' containers are transported instead of one 40' container.

One of the set of wheels of the front chassis 2 is mounted on an auxiliary axle 8 which is movable up and down.

The coupling mechanism comprises a push-in tube 9 acting as male coupling element, which protrudes from chassis 3 and is welded to cross members 10, 11 which, in their turn, are connected to side members of the chassis 3. The chassis 2 has an accommodating sleeve 12 acting as female coupling element which is welded to cross members 13, 14, which, in their turn, are connected to the side members of chassis 2.

Various sets of openings are made in the walls of the push-in tube opposite one another, two sets of which openings (15, 16) are shown in the drawing. The accommodating sleeve has a set of openings 17 located opposite one another.

By bringing one set of openings (for example 15) or another set of openings (for example 16) into register with the openings 17 and by inserting a pin or bolt through the openings in register, a coupling is produced between the chassis 2 and 3. Figure 1 shows the situation where the pin or bolt has been pushed through openings 16 and 17 to support a 45' container, whilst Figure 2 shows the situation where the pin or bolt has been inserted through the openings 15 and 17 to support a 40' container or two 20' containers.

In addition to the openings 15, 16, yet further openings can be made in the push-in tube 9. In the case where the trailer has to be suitable for two so-called rail containers (twice about 7.15 metres), the push-in tube must be provided with openings by means of which the chassis 2 and 3 can be coupled together further apart than is shown in Figure 1. If the two 20' containers have to be moved apart from the position shown in Figure 2 in order to make it possible for Customs to look inside the front container, further openings can be drilled in the push-in tube in addition to the openings 15, 16, which further openings permit a gap of about 60 cm between the coupled chassis.

## Claims

1. Articulated vehicle trailer, in particular for transporting containers, comprising a front chassis (2) which has a set of wheels and is to be coupled to a tractor unit, a rear chassis (3) which has a set of wheels and is to be coupled to the front chassis, coupling means (4) for rigidly coupling the front and rear chassis to one another, said coupling means comprising an accommodating sleeve (12) acting as female coupling element fixed to the front chassis (2) and not protruding with respect to the rear of said front chassis, and a push-in component (9) acting as male coupling element protruding forwards with respect to the front of said rear chassis (3) and meant to be pushed into the accommodating sleeve (12), whereby the wheels of the set of wheels on the front chassis (2) may have such a position or mounting that the trailer can take a bend with appreciable speed without difficulty, one of the possibilities to obtain this being the free hinging of these wheels about a vertical king pivot, characterized in that the rear chassis has at least two sets of wheels, in that in addition or in stead of the free hinging of the wheels of the set of wheels on the front chassis, these wheels could be lifted off the road, and in that the accommodating sleeve (12) and the push-in component (9) are provided with various openings (15, 16; 17), which can be brought into register with one another to allow the passage of a coupling pin or coupling bolt, in such a way that the two chassis can at least be coupled in a first position, in which the combination is suitable for transporting a 40' container and two 20' containers, and in a second position, in which the combination is suitable for transporting a 45' container.

2. Trailer according to Claim 1, characterised in that further openings are provided in the push-in component (9) and the accommodating sleeve (12) in order to bring the chassis apart into a Customs position in which access can be obtained to a container located on the front chassis.

3. Trailer according to Claim 1, characterised in that openings are present in the push-in component (9) and the accommodating sleeve (12) in order to move the chassis into a position with respect to one another such that two rail containers each having a length of about 7.15 metres can be transported.

## Patentansprüche

1. Sattelauflieger, insbesondere zum Transport von Containern, mit einem Vorderrahmen (2), der einen Radsatz aufweist und an einen Sattelschlepper zu koppeln ist, einem Hinterrahmen (3), der einen Radsatz aufweist und an den Vorderrahmen zu koppeln ist, einem Kopplungsmittel (4) zur starren Aneinanderkopplung des Vorderrahmens und des Hinterrahmens, wobei das Kopplungsmittel eine am Vorderrahmen (2) befestigte Aufnahmehülse (12), die als Aufnahmekopplungselement fungiert und gegenüber dem hinteren Teil des Vorderrahmens nicht vorsteht, und ein gegenüber dem vorderen Teil des Hinterrahmens (3) nach vorne vorstehendes Einschiebeteil (9), das als Einsteckkopplungselement fungiert und in die Aufnahmehülse (12) geschoben werden soll, umfasst, wobei die Räder des Radsatzes am Vorderrahmen (2) eine derartige Position oder Halterung aufweisen können, daß der Auflieger mit beträchtlicher Geschwindigkeit problemlos um eine Kurve fahren kann, wobei eine Möglichkeit, dies zu erreichen, das freie Schwenken dieser Räder um einen vertikalen Drehzapfen ist, dadurch gekennzeichnet, daß der Hinterrahmen mindestens zwei Radsätze aufweist, daß diese Räder zusätzlich zum freien Schwenken der Räder des Radsatzes am Vorderrahmen oder stattdessen von der Straße abgehoben werden könnten und daß die Aufnahmehülse (12) und das Einschiebeteil (9) mit verschiedenen Öffnungen (15, 16; 17) versehen sind, die aufeinander ausgerichtet werden können, um das Durchstecken eines Koppelstiftes oder Koppelbolzens zu gestatten, so daß die beiden Rahmen mindestens in einer ersten Position, in der die Kombination zum Transport eines Containers von 40 Fuß und zweier Container von 20 Fuß geeignet ist, und in einer zweiten Position, in der die Kombination zum Transport eines Containers von 45 Fuß geeignet ist, aneinandergekoppelt werden können.

2. Auflieger nach Anspruch 1, dadurch gekennzeichnet, daß in dem Einschiebeteil (9) und in der Aufnahmehülse (12) weitere Öffnungen vorgesehen sind, um die Rahmen in eine Zoll-Position auseinanderzubringen, in der Zugang zu einem auf dem Vorderrahmen angeordneten Container erreicht wird.

3. Auflieger nach Anspruch 1, dadurch gekennzeichnet, daß in dem Einschiebeteil (9) und der Aufnahmehülse (12) Öffnungen vorgesehen sind, um die Rahmen relativ zueinander in eine derartige Position zu bewegen, daß zwei Eisenbahncontainer, die jeweils eine Länge von 7,15 m aufweisen, transportiert werden können.

## Revendications

1. Remorque de semi-remorque, en particulier pour transporter des conteneurs, comprenant un châssis avant (2) qui possède un jeu de roues et qui doit être couplé à une unité de tracteur, un châssis arrière (3) qui possède un jeu de roues et qui doit être couplé au châssis avant, un moyen de couplage (4) pour coupler mutuellement à demeure les châssis avant et arrière, ledit moyen de couplage comprenant un manchon adaptable (12) qui fait office d'élément de couplage femelle fixé au châssis avant (2) et qui ne fait pas saillie par rapport à l'arrière dudit châssis avant, et un composant (9) d'insertion par poussée faisant office d'élément de couplage mâle, faisant saillie vers l'avant par rapport à l'avant dudit châssis arrière (3) et destiné à être poussé dans le manchon adaptable (12), par lequel les roues du jeu de roues sur le châssis avant (2) peuvent prendre une position ou un montage tel que la remorque peut négocier un virage à vitesse appréciable sans difficulté, une des possibilités pour obtenir cette caractéristique étant le pivotement libre de ces roues autour d'un pivot vertical d'essieu avant, caractérisée en ce que le châssis arrière possède au moins deux jeux de roues, en ce qu'en outre, ou à la place du pivotement libre des roues du jeu de roues sur le châssis avant, ces roues peuvent être soulevées par rapport à la route, et en ce que le manchon adaptable (12) et le composant (9) d'insertion par poussée sont munis de diverses ouvertures (15, 16; 17) qui peuvent être amenées en correspondance mutuelle pour permettre le passage d'une broche de couplage ou d'un boulon de couplage, de telle sorte que les deux châssis peuvent être au moins couplés dans une première position dans laquelle le semi-remorque est approprié pour transporter un conteneur de 40' et deux conteneurs de 20', et dans une seconde position dans laquelle le semi-remorque est approprié pour transporter un conteneur de 45'.

2. Remorque selon la revendication 1, caractérisée en ce que des ouvertures supplémentaires sont pratiquées dans le composant (9) d'insertion par poussée et dans le manchon adaptable (12) dans le but de séparer le châssis pour l'amener dans une position destinée à la douane, dans laquelle on peut avoir accès à un conteneur disposé sur le châssis avant.

3. Remorque selon la revendication 1, caractérisée en ce que des ouvertures sont présentes dans le composant (9) d'insertion par poussée et dans le manchon adaptable (12) dans le but de déplacer le châssis dans une position par rapport à une autre de telle sorte que l'on peut transporter deux conteneurs pour chemins de fer, possédant chacun une longueur d'environ 7,15 m.
